# EUROPÄISCHE PATENTSCHRIFT

(11) **EP 1 123 300 B1**
(45) Veröffentlichungstag und Bekanntmachung des Hinweises auf die Patenterteilung: **18.09.2002**
(21) Anmeldenummer: 99953791.3
(22) Anmeldetag: 12.10.1999
(51) Int. Cl.: C07F 9/09, D06P 1/667, C08G 65/335

(54) **PHOSPHORSÄUREESTER**
PHOSPHORIC ACID ESTERS
ESTERS D'ACIDE PHOSPHORIQUE

(30) Priorität: 23.10.1998 DE 19848894
(43) Veröffentlichungstag der Anmeldung: 16.08.2001
(73) Patentinhaber: Bayer Aktiengesellschaft, 51368 Leverkusen (DE)
(72) Erfinder: VOGT, Uwe, D-40789 Monheim (DE); HEINEN, Ralf, D-50737 Köln (DE); RIEGELS, Martin, D-42799 Leichlingen (DE)
(86) Internationale Anmeldenummer: EP9907667
(87) Internationale Veröffentlichungsnummer: WO00024749

(56) Entgegenhaltungen:
- EP-A- 0 442 844
- EP-A- 0 759 440
- DE-A- 1 619 372
- DE-A- 1 946 058
- DE-A- 4 442 354

## Beschreibung

Die vorliegende Erfindung betrifft neuartige Phosphorsäureester, ein Verfahren zu ihrer Herstellung und ihre Verwendung als Färbereihilfsmittel.

Bei der Färbung von Textilien werden Egalisiermittel als Hilfsmittel eingesetzt. Bei diesen Egalisiermitteln handelt es sich um grenzflächenaktive Substanzen, welche die Aufgabe haben, die zu färbende Faser oder Fasermischung gut zu benetzen, das Durchfärben der Fasern zu fördern und ein zu schnelles, unegales Aufziehen der Farbstoffe beim Färbeprozeß zu verhindern. Durch den Einsatz der Egalisiermittel kann somit ein gleichmäßiges und einheitliches Färbeergebnis erreicht werden.

Das Färben von stickstoffhaltigen Fasermaterialien, insbesondere Wolle, erfolgt geeigneterweise mit anionischen Farbstoffen, wie z.B. Säurefarbstoffen, 1:1-Metallkomplexfarbstoffen, 1:2-Metallkomplexfarbstoffen, Chromfarbstoffen oder deren Mischungen.

Aus dem Stand der Technik sind bereits verschiedenste Egalisiermittel für die Färbung von Textilmaterialien, insbesondere Wolle, mit den angeführten Farbstoffen bekannt.

In der DE-OS-19 40 178 werden beispielsweise Polyalkylenglykoletherketten aufweisende Ethansulfonsäureverbindungen oder deren Quaternisierungsprodukte als Egalisiermittel für das Färben stickstoffhaltiger Fasermaterialien mit Säurefarbstoffen oder 1 :2-Metallkomplexfarbstoffen beschrieben. Die Polyalkylenglykoletherketten aufweisenden Ethansulfonsäureverbindungen besitzen dabei folgende Strukturformel

R R'N-(CH₂-CHR"-O)ₘ-CH₂-CH₂-SO₃M

wobei R für einen C₁₂-C₂₂-Alkyl-, einen C₁₂-C₂₂-Alkenyl- oder C₁₂-C₂₂-Cycloalkylrest, R' für CH₃ oder eine der Gruppierungen -(CH₂-CHR"-O-)ₙH oder -(CH₂-CHR"-O)ₙ-CH₂-CH₂-SO₃M, R" für H, CH₃,C₂H₅ oder Phenyl steht. M ein Kation darstellt und die Summe aus m+n eine Zahl von 5-70 ist, wobei mindestens 80% der im Molekül enthaltenen Alkylenoxid-Einheiten Ethylenoxid-Einheiten sind.

Aus der DE-OS-1 619 372 ist die Färbung von natürlichen und synthetischen Polyamidfasern, Cellulose oder Celluloseregeneratfasern in Gegenwart spezieller Egalisiermittel als Ersatz für natürliches Lecithin bekannt. Diese Egalisiermittel werden erhalten durch Alkoxylierung von mit Fettsäuren acylierten Polyalkylenaminen, Umsetzung dieser Alkoxylierungsprodukte mit P₄O₁₀ zu partiellen Phosphorsäureestern und Neutralisierung letzterer mit Alkanolaminen.

Aus der DE-OS-1 946 058 ist es ferner bekannt, zum schaumarmen, streifenfreien und egalen Färben von Polyamid-Geweben im Färbeprozeß Gemische aus a) niedrig ethoxilierten Fettdiaminen, b) einem Alkalisalz von Dinaphthyl-methandisulfosäure und c) propoxylierten Mono- und Diestern der Orthophosphorsäure einzusetzen.

In der DE-OS 28 21 494 wird ein Verfahren zum Färben von Web- und Wirkwaren aus Polyesterfasern mit Dispersionsfarbstoffen beschrieben, bei dem zur Erhöhung der Dispersionsstabilität und Verbesserung der Egalisierwirkung eine wässrige Zubereitung aus Lecithin, einer ethoxilierten Carbonsäure und eines ethoxilierten Alkohols zugesetzt wird.

Es ist ferner bekannt, Phosphorsäureester als Dispergiermittel für anorganische und organische Pigmente sowohl in Kunststoffen als auch besonders in Lacken, Druckund Anstrichfarben einzusetzen. In der EP-A-0 759 440 werden beispielsweise Phosphorsäureester beschrieben, die auf folgendem Weg hergestellt werden: Zunächst wird ein Amin mit einem Alkylenoxid oder Alkylencarbonat zu einem Aminoalkohol oder Aminoetheralkohol umgesetzt. Dieser Aminoalkohol oder Aminoetheralkohol wird mit einer Hydroxycarbonsäure oder einer Dicarbonsäure und einem Diol verestert oder mit einem Diisocyanat und einem Diol in ein Urethan überführt. Der erhaltene Aminoester bzw. Aminoetherester oder das gebildete Aminourethan bzw. Aminoetherurethan wird abschließend in einen Phosphorsäureester überführt (phosphatiert). Diese Phosphorsäureester wirken sich stabilisierend auf die Pigmentdispersionen aus und verhindern eine Agglomeration oder Flockung der Pigmentteilchen. Eine Anwendung dieser Phosphorsäurester als Egalisiermittel bei der Färbung von Textilmaterialien wird nicht beschrieben.

Aus der DE-A 44 42 354 sind ferner Phosphorsäureester bekannt, die durch Umsetzung von Phosphorpentoxid oder Polyphosphorsäure mit einem primären Alkohol oder dessen Alkoxylaten und anschließende Veresterung verbliebener freier Säuregruppen mit Alkylenoxiden erhalten werden. Derartige Phosphorsäureester werden ebenfalls als Netzmittel im Bereich der Textil- und Faserbehandlung eingesetzt.

Die Aufgabe der vorliegenden Erfindung bestand darin, neue Substanzen zur Verfügung zu stellen, die für den Einsatz als Egalisiermittel bei der Färbung von Textilmaterialien, insbesondere Wolle, geeignet sind.

Gelöst wird diese Aufgabe durch neue Phosphorsäureester der allgemeinen Formel 1, 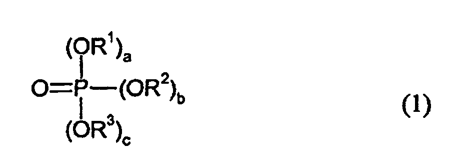 worin
- R¹: ein aliphatischer Rest mit 1-30 C-Atomen ist,
- R²: einen Rest der allgemeinen Formel 2 darstellt, 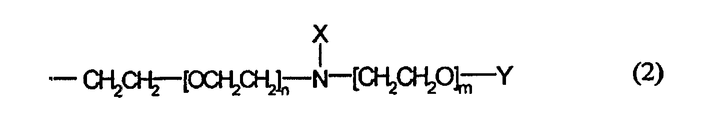 wobei
n eine Zahl von 0 bis 30,
m eine Zahl von 1 bis 29,
X ein aliphatischer Rest mit 4-24 C-Atomen und
Y H oder PO(OM)₂ ist, wobei M unabhängig voneinander für Wasserstoff, Alkalimetall-, Ammonium-, Mono-, Di-, Tri- oder Tetra- (C₁-C₆-Alkyl)-ammonium oder Mono-, Di-, Tri- oder Tetra-(C₂-C₆Alkanol)-ammoniumionen steht,
- R³: einen Rest der allgemeinen Formel 3 darstellt, 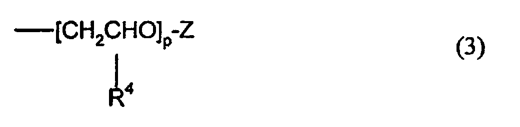 wobei
p eine Zahl von 4 bis 35 ist,
R⁴ H, Methyl, Ethyl, Phenyl oder Mischungen aus H und Methyl bedeutet und
Z H, Methyl, Ethyl oder PO(OM)₂ ist, wobei M unabhängig voneinander für Wasserstoff, Alkalimetall-, Ammonium-, Mono-, Di-, Tri- oder Tetra-(C₁-C₆-Alkyl)-ammonium- oder Mono-, Di-, Tri- oder Tetra-(C₂-C₆-Alkanol)-ammoniumionen steht, und
a, b und c Zahlen von 0 bis 3 sind und a+b+c = 3 ist, b jedoch nicht Null ist.

Gegenstand der Erfindung ist ferner ein Verfahren zur Herstellung der Phosphorsäureester gemäß Formel 1 sowie die Verwendung dieser Phosphorsäureester als Hilfsmittel bei der Färbung stickstoffhaltiger Fasermaterialien, insbesondere Wolle.

In den Phosphorsäureestern der Formel 1 ist R¹ ein aliphatischer Rest mit 1 bis 30 C-Atomen. Bei diesem aliphatischen Rest handelt es sich bevorzugt um geradkettige oder verzweigte Alkyl- oder Alkenylreste mit 1-30 C-Atomen. Beispiele für geradkettige oder verzweigte C₁-C₈-Alkylgruppen sind Methyl, Ethyl, Propyl, 1-Methylethyl, Butyl, 1-Methylpropyl, 2-Methylpropyl, 1,1-Dimethylethyl, n-Pentyl, 1-Methylbutyl, 2-Methylbutyl, 3-Methylbutyl, 1,2-Dimethylpropyl, 1,1-Dimethylpropyl, 2,2-Dimethylpropyl, 1-Ethylpropyl, n-Hexyl, 1-Methylpentyl, 2-Methylpentyl, 3-Methylpentyl, 4-Methylpentyl, 1,2-Dimethylbutyl, 1,3-Dimethylbutyl, 2,3-Dimethylbutyl, 1,1-Dimethylbutyl, 2,2-Dimethylbutyl, 3,3-Dimethylbutyl, 1,1,2-Trimethylpropyl, 1-Ethylbutyl, 2-Ethylbutyl, 1-Ethyl-2-methylpropyl, n-Heptyl, 1-Methylhexyl, 1-Ethylpentyl, 2-Etylpentyl, 1-Propylbutyl und n-Octyl.

Beispiele für geradkettige oder verzweigte C₈-C₃₀-Alkylgruppen sind n-Octyl, 2-Ethylhexyl, n-Nonyl, iso-Nonyl, n-Decyl, n-Undecyl, n-Dodecyl, n-Tridecyl, n-Tetradecyl, n-Pentadecyl, n-Hexadecyl, n-Heptadecyl, n-Octadecyl, n-Nonadecyl, n-Eicosyl und n-Docosyl.

Die Bedeutung der Alkenylgruppe umfaßt geradkettige und verzweigte C₁-C₃₀-Alkenylgruppen mit 1, 2 oder 3 Doppelbindungen. Vorzugsweise handelt es sich um geradkettige oder verzweigte C₄-C₃₀-Alkenyl-, insbesondere C₈-C₂₀-Alkenylgruppen. Beispiele für Alkenylgruppen sind Heptenyl, Octenyl, Nonenyl, Decenyl, Undecenyl, Tridecenyl, Tetradecenyl, Pentadecenyl, Hexadecenyl, Heptadecenyl, Octadecenyl, Nonadecenyl, Hexadecadienyl, Hexadecatrienyl, Octadecadienyl sowie Octadecatrienyl.

Die Bedeutung des Alkyl- bzw. Alkenylrestes für R¹ umfaßt auch Mischungen verschiedener Alkyl- bzw. Alkenylgruppen, wie sie z.B. in natürlichen Fetten und Ölen, z.B. Kokosöl, Palmkernöl, Sojaöl, Rüböl, Olivenöl, Sonnenblumenöl, Baumwollsaatöl, Erdnußöl, Leinöl, Rapsöl oder Talgfett vorkommen.

Im Rest R² steht X für einen aliphatischen Rest mit 4-24 Kohlenstoffatomen. Als solche aliphatischen Reste kommen geradkettige und verzweigte Alkyl- und Alkenylreste mit 4-24 C-Atomen, bevorzugt 12-24 und besonders bevorzugt 16-22 C-Atomen in Betracht. Insbesondere steht X für einen Dodecyl-, Tetradecyl-, Hexadecyl-, Octadecyl-, Eicosyl-, Docosyl-, Octadecenyl- oder Abietylrest.

Die Bedeutung des Alkyl- bzw. Alkenylrestes für X umfaßt dabei ebenfalls Mischungen verschiedener Alkyl- bzw. Alkenylgruppen, wie sie z.B. in natürlichen Fetten und Ölen, z.B. Kokosöl, Palmkernöl, Sojaöl, Rüböl, Olivenöl, Sonnenblumenöl, Baumwollsaatöl, Erdnußöl, Leinöl, Rapsöl oder Talgfett vorkommen.

Die Gruppe Y steht im Rest R² für H oder PO(OM)₂. Für M kommen als Kationen unabhängig voneinander Wasserstoff, Alkalimetall-, bevorzugt Natrium- oder Kalium, Ammonium-, Mono-, Di-, Tri- oder Tetra- (C₁-C₆-Alkyl)-ammonium- oder Mono-, Di-, Tri- oder Tetra- (C₂-C₆-Alkanol)-ammoniumionen zum Einsatz. Letztere leiten sich inbesondere von Mono-, Di- oder Triethanolamin ab.

Der Index n im Rest R² steht für eine Zahl von 0 bis 30, bevorzugt 0 bis 10, insbesondere 0 bis 5. Der Index m im Rest R² steht für eine Zahl von 1 bis 29, bevorzugt 1 bis 10, insbesondere 1 bis 5.

Die Gruppe Z steht im Rest R³ für H, Methyl, Ethyl oder PO(OM)₂. Vorzugsweise steht Z für H oder PO(OM)₂. Für M kommen als Kationen unabhängig voneinander Wasserstoff, Alkalimetall-, bevorzugt Natrium- oder Kalium-, Ammonium-, Mono-, Di-, Tri- oder Tetra- (C₁-C₆-Alkyl)-ammonium- oder Mono-, Di-, Tri- oder Tetra-(C₂-C₆-Alkanol)-ammoniumionen in Frage. Letztere leiten sich inbesondere von Mono-, Di- oder Triethanolamin ab.

Der Rest R⁴ bedeutet Wasserstoff, Methyl, Ethyl, Phenyl oder auch Mischungen aus Wasserstoff und Methyl. Bevorzugt steht R⁴ für Wasserstoff oder Methyl. Bei Mischungen aus Wasserstoff und Methyl können maximal 80% des Gesamtwertes von R⁴ für Methyl und minimal 20 % des Gesamtwertes von R⁴ für Wasserstoff stehen.

Der Index p im Rest R³ steht für eine Zahl von 4 bis 35 und bevorzugt von 9 bis 22.

Die Indices a, b und c in der Formel I sind Zahlen von 0 bis 3, wobei a + b + c = 3 ist, b jedoch nicht Null ist. Bevorzugt sind a, b und c jeweils 1.

Bevorzugt sind Phosphorsäureester gemäß Formel 1,
wobei
- R¹: ein aliphatischer Rest mit 4-30 C-Atomen ist,
im Rest R²
   n eine Zahl von 0 bis 10,
   m eine Zahl von 1 bis 10,
   X ein aliphatischer Rest mit 12-24 C-Atomen und
   Y H oder PO(OM)₂ ist, wobei M unabhängig voneinander für Wasserstoff, Alkalimetall-, Ammonium-, Mono-, Di-, Tri- oder Tetra-(C₁-C₆-Alkyl)-ammonium- oder Mono-, Di-, Tri- oder Tetra- (C₂-C₆Alkanol)-ammoniumionen steht und
im Rest R³
   p eine Zahl von 4 bis 35,
   R⁴ H oder Methyl und
   Z H, Methyl, Ethyl oder PO(OM)₂ ist, wobei M unabhängig voneinander für Wasserstoff, Alkalimetall-, Ammonium-, Mono-, Di-, Tri- oder Tetra-(C₁-C₆-Alkyl)-ammonium- oder Mono-, Di-, Tri- oder Tetra-(C₂-C₆-Alkanol)-ammoniumionen steht, und
- a, b und c: Zahlen von 0 bis 3 sind und a+b+c = 3 ist, b jedoch nicht Null ist.

Besonders bevorzugt sind Phosphorsäureester gemäß Formel 1, wobei
- R¹: ein aliphatischer Rest mit 8-20 C-Atomen ist,
im Rest R²
   n eine Zahl von 0 bis 5,
   m eine Zahl von 1 bis 5,
   X ein aliphatischer Rest mit 16-22 C-Atomen und
   Y H ist,
im Rest R³
   p eine Zahl von 9-22,
   R⁴ H und
   Z H ist und
- a, b und c: Zahlen von 0 bis 3 sind und a+b+c = 3 ist, b jedoch nicht Null ist.

Gegenstand der Erfindung ist auch ein Verfahren zur Herstellung der Phosphorsäureester nach Formel 1 durch Umsetzung von Phosphoroxychlorid mit den Alkoholen R¹OH, R²OH und R³OH, wobei R¹, R² und R³ die zuvor für Formel 1 genannten Bedeutungen besitzen, Y jedoch ausschließlich für Wasserstoff und Z entweder für Wasserstoff, Methyl oder Ethyl steht.

In einer geeigneten Ausführungsform des erfindungsgemäßen Verfahrens setzt man insgesamt 3 mol einer Mischung der Alkohole R¹OH, R²OH und R³OH mit 1 bis 2 mol, bevorzugt mit 1.0 bis 1.2 mol Phosphoroxychlorid um.

Die drei Alkohole R¹OH, R²OH und R³OH können dabei in folgenden Mengenverhältnissen zueinander verwendet werden:
- R¹OH: 10 - 40, bevorzugt 30 - 40 mol %
- R²OH: 20 - 80, bevorzugt 30 - 40 mol % und
- R³OH: 10 - 40, bevorzugt 30 - 40 mol %,
wobei die Summe der Mengen der drei Alkohole immer 100 mol% beträgt.

Üblicherweise legt man zunächst die Alkohole R¹OH, R²OH und R³OH vor, erwärmt diese Mischung unter Aufschmelzen der Alkohole und gibt bei 40 bis 60°C das Phosphoroxychlorid zu. Bei dieser Zugabe kommt es zu einer Erhöhung der Temperatur, in der Regel auf mindestens 80°C. Anschließend wird die Reaktionsmischung bei erhöhter Temperatur, bevorzugt ungefähr 100°C, nachgerührt. Durch Verminderung des Drucks ist es möglich, die bei der Umsetzung entstandene HCl aus dem Reaktionsprodukt zu entfernen. Es hat sich ferner bewährt, anschließend durch Zugabe einer Base wie Natronlauge oder Diethanolamin einen pH-Wert von 5 bis 7 einzustellen.

Die Alkohole R¹OH sind allgemein zugänglich. Die Herstellung der Alkohole R²OH kann nach dem Fachmann bekannten Methoden erfolgen und ist beispielsweise in der DE-OS-1 940 178 beschrieben. Zunächst lagert man 2 bis 60 Mol Ethylenoxid an ein aliphatisches Amin X-NH₂ an, wobei X die oben angeführte Bedeutungen besitzt. Als aliphatische Amine haben sich insbesondere Dodecyl-, Tetradecyl-, Hexadecyl-, Octadecyl-, Eicosyl-, Docosyl, Octadecenyl- oder Abietylamin bewährt.

Bevorzugte Beispiele sind ferner Umsetzungsprodukte aus 1 mol Talgfettamin mit 2 mol, 5 mol oder 10 mol Ethylenoxid.

Die Veresterung der endständigen OH Gruppe im Rest R², so daß Y für PO(OM)₂ steht, ist im Rahmen der Umsetzung der Alkohole mit Phosphoroxychlorid möglich, sofern mit einem Überschuß an Phosphoroxychlorid gearbeitet wird.

Die Alkohole R³OH sind allgemein zugänglich. Bevorzugte Beispiele für R³OH sind Triethylenglykol und Polyethylenglykole mit mittleren Molekulargewichten von 200 bis 1 500 g/mol oder Monomethyl- bzw. Monoethylether dieser Verbindungen.

Natürlich sind auch alle anderen dem Fachmann bekannten Methoden zur Herstellung von Phosphorsäureestem geeignet, die erfindungsgemäßen Verbindungen herzustellen, so z.B. die Umesterung von Triethylphosphat mit den Alkoholen R¹OH, R²OH und R³OH.

Die erfindungsgemäßen Verbindungen der Formel I liegen in der Regel bei Raumtemperatur in fester, wachsartiger Form vor. Im Bereich von 30 bis 60°C beginnen sie zu schmelzen. Um die Phosphorsäureester in eine flüssige und damit anwendungsfreundlichere weil leichter dosierbare Form zu überführen, empfiehlt es sich, organische oder wässrig-organische Formulierungen herzustellen.

Gegenstand der Erfindung sind daher auch organische oder wässrig-organische Formulierungen enthaltend 25-70 Gew% der Phosphorsäureester gemäß Formel 1. Zur Herstellung dieser Formulierungen kann das Reaktionsgemisch des erfindungsgemäßen Verfahrens ohne weitere Aufarbeitung eingesetzt werden. Als organische Lösungsmittel sind solche geeignet, die sich gegenüber den Phosphorsäureestern inert verhalten und wassermischbar sind. Bevorzugt werden Mono-, Di- oder Oligoethylenglykole, -propylenglykole oder -ethylen/propylenglykole, deren Mono - oder Diether oder Mischungen daraus eingesetzt. Insbesondere wird Butyldiglykol oder Methyldiglykol verwendet.

Gegenstand der Erfindung ist ferner die Verwendung der Phosphorsäureester der Formel 1 oder der entsprechenden organischen oder wässrig-organischen Formulierungen als Färbereihilfsmittel beim Färben von stickstoffhaltigen Fasermaterialien. bevorzugt Wolle.

Die Phosphorsäureester gemäß Formel 1 bzw. die organischen oder wässrig-organischen Formulierungen werden den Färbeflotten zugesetzt. Das Färben der stickstoffhaltigen Textilmaterialien, insbesondere Wolle, in Gegenwart der erfindungsgemäßen Verbindungen der Formel 1 kann dabei so durchgeführt werden, daß man das Färbegut zunächst in eine auf 40 bis 50°C erwärmte Färbeflotte einbringt, die den Farbstoff, die Phosphorsäureester der Formel 1 und Säuren, z.B. Essigsäure, enthält. Anschließend erhitzt man das Färbebad allmählich auf 100 bis 130°C und hält es so lange auf dieser Temperatur, bis es erschöpft ist. Es ist ebenso möglich, das Färbegut mit einer wässrigen Flotte, die nur die Phosphorsäureester der Formel 1 und Säure enthält, kurze Zeit bei 40 bis 50°C vorzubehandeln und erst dann dieser Flotte bei Temperaturen zwischen 40 und 98°C die Farbstoffe zuzusetzen, anschließend die Temperatur des Färbebades allmählich auf 100 bis 130°C zu steigern und bis zur Baderschöpfung auf dieser Temperatur zu halten.

Als Farbstoff kommen die für das Färben von stickstoffhaltigen Fasermaterialien, insbesondere Wolle, geeigneten anionischen Farbstoffe, z.B. Säurefarbstoffe, 1:1-Metallkomplexfarbstoffe, 1:2-Metallkomplexfarbstoffe oder Chromfarbstoffe sowie deren Mischungen in Betracht.

Die Mengen, in denen die erfindungsgemäßen Verbindungen den Färbebädern zugesetzt wird, können in weiten Grenzen schwanken. Sie lassen sich durch Vorversuche leicht ermitteln. Im allgemeinen haben sich Mengen von 0.25-3.0, vorzugsweise 0.5 bis 1.0 Gew.-%, bezogen auf das Gewicht des Färbegutes, bewährt.

Das Färbeverfahren eignet sich für alle mit den aufgeführten Farbstoffen anfärbbaren stickstoffhaltigen Fasermaterialien, insbesondere für natürliche Polyamide, wie Wolle und Seide, für synthetische Polyamide, wie Hexamethylendiadipat, Poly-ε-caprolactam und Poly-ω-aminoundecansäure, für basisch modifizierte Polyacrylnitrile sowie für deren Mischungen untereinander oder mit anderen Fasermaterialien, wie solchen aus nativer und regenerierter Cellulose, Polyacrylnitril, Polyurethanen oder Polyestern. Die genannten anfärbbaren Fasermaterialien können dabei in den unterschiedlichsten Verarbeitungsformen vorliegen, beispielsweise als Flocke, Kammzug, texturierte Fäden, Spinnkabel, Garn, Gewebe, Gewirke oder Vliese.

Mit Hilfe der Phosphorsäureester der Formel 1 gelingt es, diese stickstoffhaltigen Textilmaterialien sehr gleichmäßig zu färben. Neben ihrer hervorragenden Qualität als Färbereihilfsmittel zeigen die Phosphorsäureester der Formel 1 überraschenderweise auch eine gute biologische Abbaubarkeit.

### Beispiele

### Beispiel 1 (Herstellung einer erfindungsgemäßen Verbindung)

Ein Gemisch aus 27.0 g (0.1 mol) Stearylalkohol, 40.0 g (0.1 mol) Polyethylenglykol mit einem mittleren Molekulargewicht von 400 g/mol und 48.8 g (0.1 mol) eines Umsetzungsproduktes aus 1 mol Talgfettamin mit 5 mol Ethylenoxid wird bei 55°C vorgelegt und innerhalb von 10 min mit 15.3 g (0.1 mol) Phosphoroxychlorid versetzt. Die Temperatur steigt dabei auf 90°C. Unter einem leichten Stickstoffstrom läßt man anschließend 5 Stunden bei 100°C nachrühren. Es folgt eine weitere Stunde Nachrührzeit unter einem verringertem Druck von 20 mbar. Man läßt auf 50°C abkühlen und neutralisiert den Ansatz durch vorsichtige Zugabe von 45%iger Natronlauge auf einen pH-Wert von 6 bis 7. Nach dem Abkühlen auf Raumtemperatur erstarrt das Reaktionsprodukt zu einer wachsartigen Masse. Die Ausbeute beträgt 138 g. Beim erneuten Aufheizen beginnt das Reaktionsprodukt bei etwa 44°C zu schmelzen.

### Beispiel 2 (Herstellung einer erfindungsgemäßen Verbindung)

Die Durchführung erfolgt analog zu Beispiel 1, nach Ablauf der Reaktion wird jedoch anstatt mit Natronlauge mit Diethanolamin auf einen pH-Wert von 6 bis 7 neutralisiert. Die Ausbeute beträgt 143 g. Beim erneuten Aufheizen beginnt das Reaktionsprodukt bei etwa 42°C zu schmelzen.

### Beispiel 3 (Herstellung einer erfindungsgemäßen Verbindung)

In Analogie zu Beispiel 1 wird die Umsetzung von 24.2 g (0.1 mol) Hexadecylalkohol, 40.0 g (0.1 mol) Polyethylenglykol mit einem mittleren Molekulargewicht von 400 g/mol und 48.8 g (0.1 mol) eines Umsetzungsproduktes aus 1 mol Talgfettamin und 5 mol Ethylenoxid durchgeführt. Die Neutralisierung des Reaktionsgemisches erfolgt mit 45%iger Natronlauge. Erhalten werden 135 g eines wachsartigen Produktes mit einem Schmelzpunkt von etwa 44°C.

### Beispiel 4 (Herstellung einer erfindungsgemäßen Verbindung)

Die Durchführung erfolgt analog zu Beispiel 3, nach Ablauf der Reaktion wird jedoch anstatt mit Natronlauge mit Diethanolamin neutralisiert. Man erhält 140 g eines wachsartigen, bei etwa 43°C schmelzenden Produkts.

### Beispiel 5 (Herstellung einer flüssigen Zubereitung des Phosphorsäureesters aus Beispiel 2)

100 g der Phosphorsäureester aus Beispiel 2 werden bei 50°C mit 100 g Butyldiglykol bis zur klaren Lösung verrührt. Anschließend läßt man abkühlen.

### Beispiel 6 (Herstellung einer flüssigen Zubereitung des Phosphorsäureesters aus Beispiel 2)

30 g der Phosphorsäureester aus Beispiel 4 werden bei 50°C mit 40 g Butyldiglykol und 30 g entmineralisiertem Wasser bis zur klaren Lösung verrührt. Anschließend läßt man abkühlen.

### Beispiel 7 (Anwendung)

30 g Wollkammgarn werden in einem Zirkulationsfärbeapparat (Typ Color Star der Firma Mathis) wie folgt gefärbt (Prozentangaben beziehen sich auf das Warengewicht; ISOLAN® sind Farbstoffe der DyStar Textilfarben GmbH & Co. Deutschland KG).

### 1. Färbung

- Flottenumpumpung:: Wechselseitig 4 min von innen nach außen und 2 min von außen nach innen

Flotte:

| | |
|---|---|
| ISOLAN Gelb K-GLN 250 % | 0.3 % |
| ISOLAN Bordo R 220 % | 0.15 % |
| ISOLAN Grau K-BRLS 200 % | 0.3 % |
| Natriumsulfat | 5 % |
| Essigsäure 60 %ig | 3 % |
| Hilfsmittel gemäß Beispiel 1 | 0.5 % |

pH-Wert der Flotte: 4.5
Flottenverhältnis: 1:20
Starttemperatur: 50°C

### Ablauf der Färbung:

- 10 min Vorlaufzeit bei 50°C
- Aufheizen auf 98°C (Aufheizgeschwindigkeit 2°C/min)
- 30 min bei 98°C halten
- Abkühlen auf 70°C (Abkühlgeschwindigkeit 2°C/min)
- 5 min bei 70°C halten
- Ablassen der Flotte

### 2. Spülen

- Flottenumpumpung:: Wechselseitig 4 min von innen nach außen und 2 min von außen nach innen
- Temperatur:: 40°C
- Spüldauer:: 12 min

- Ablassen der Spülflotte
- Auffüllen neuer Spülflotte
   - Temperatur:: 60°C
   - Spüldauer:: 12 min
- Ablassen der Spülflotte

### 3. Absaugen und Trocknen der Kammgarnspule

### 12 Stunden bei 50°C

Aus dem gefärbten Wollkammgarn wird ein Strickstück Innen-Mitte-Außen hergestellt. Bewertet wird der Farbtonablauf des Strickstückes, d.h. die Farbtonabweichung zwischen dem inneren, mittleren und äußeren Bereich der Kammgarnspule.
Es resultiert ein Strickstück mit einwandfreiem Farbtonablauf.

### Beispiel 8

Wird die in Beispiel 5 beschriebene Färbung mit der folgenden Flotte

| | |
|---|---|
| ISOLAN Gelb S-GL | 0.3% |
| ISOLAN Rot S-RL | 0.3 % |
| ISOLAN Grau S-GL | 0.3 % |
| Natriumsulfat | 5 % |
| Essigsäure 60% | 3 % |
| Hilfsmittel gemäß Beispiel 3 | 1.0 % |

durchgeführt, so resultiert ebenfalls ein Strickstück mit einwandfreiem Farbtonablauf

### Beispiele 9 und 10 (Vergleichsbeispiele)

Wird die in den Beispielen 7 und 8 beschriebene Färbung ohne das erfindungsgemäße Hilfsmittel durchgeführt, so resultiert aus dem gefärbten Wollkammgarn ein Strickstück, das einen sehr deutlichen Inne-Mitte-Außen-Effekt, d.h. einen starken Farbtonunterschied innerhalb des Strickstückes zeigt.

### Beispiele 11 und 12 (Vergleichsbeispiele)

Ein ebenfalls sehr deutlicher Innen-Mitte-Außen-Effekt wird erkennbar, wenn man in der Färbung gemäß Beispiel 7 anstatt der erfindungsgemäßen Verbindungen folgende Vergleichsverbindungen einsetzt:
Umsetzungsprodukt aus 27.0 g (0.1 mol) Stearylalkohol, 40.0 g (0.1 mol) Polyethylenglykol mit einem mittleren Molekulargewicht von 400 g/mol und 46.4 g (0.1 mol) eines Umsetzungsproduktes aus 1 mol Oleylalkohol mit 5 mol Ethylenoxid. Die anschließende Neutralisierung erfolgt mit Natronlauge.
Umsetzungsprodukt aus aus 3.2 g (0.1 mol) Methanol, 10.6 g (0.1 mol) Diethylenglykol und 48.8 g (0.1 mol) eines Umsetzungsproduktes aus 1 mol Talgfettamin mit 5 mol Ethylenoxid. Die anschließende Neutralisierung erfolgt mit Natronlauge.

## Patentansprüche

1. Phosphorsäureester der allgemeinen Formel 1, 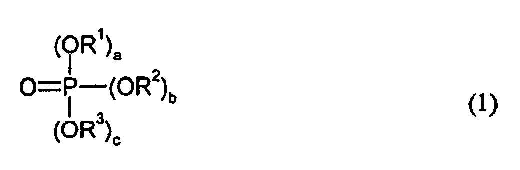 worin
R¹ ein aliphatischer Rest mit 1-30 C-Atomen ist,
R² einen Rest der allgemeinen Formel 2 darstellt, 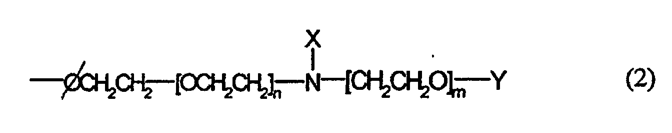 wobei
n eine Zahl von 0 bis 30
m eine Zahl von 1 bis 29
X ein aliphatischer Rest mit 4-24 C-Atomen und
Y H oder PO(OM)₂ ist, wobei M unabhängig voneinander für H, Alkalimetall, Ammonium, Mono-, Di-, Tri- oder Tetra- (C₁-C₆-Alkyl)-ammoniumionen oder Mono-, Di-, Tri- oder Tetra-(C₂-C₆-Alkanol)-ammoniumionen steht,
R³ einen Rest der allgemeinen Formel 3 darstellt, 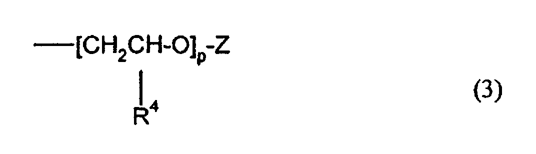 wobei
p eine Zahl von 4 bis 35 ist,
R⁴ H, Methyl, Ethyl oder Phenyl oder Mischungen aus H und Methyl bedeutet und
Z H, Methyl, Ethyl oder PO(OM)₂ ist, wobei M unabhängig voneinander für H, Alkalimetall, Ammonium, Mono-, Di-, Tri-oder Tetra-(C₁-C₆-Alkyl)-ammoniumionen oder Mono-, Di-, Tri- oder Tetra- (C₂-C₆-Alkanol)-ammoniumionen steht, und
a, b und c Zahlen von 0 bis 3 sind und a+b+c = 3 ist, b jedoch nicht 0 ist.

2. Phosphorsäureester nach Anspruch 1, wobei
R¹ ein aliphatischer Rest mit 4-30 C-Atomen ist,
im Rest R²
n eine Zahl von 0 bis 10,
m eine Zahl von 1 bis 10,
X ein aliphatischer Rest mit 12-24 C-Atomen and
Y H oder PO(OM)₂ ist, wobei M unabhängig voneinander für H, Alkalimetall, Ammonium, Mono-, Di-, Tri- oder Tetra-(C₁-C₆-Alkyl)-ammoniumionen oder Mono-, Di-, Tri- oder Tetra- (C₂-C₆-Alkanol)-ammoniumionen steht und
im Rest R³
p eine Zahl von 4 bis 35,
R⁴ H oder Methyl und
Z H, Methyl, Ethyl oder PO(OM)₂ ist, wobei M unabhängig von-einander für H, Alkalimetall, Ammonium, Mono-, Di-, Tri-oder Tetra-(C₁-C₆-Alkyl)-ammoniumionen oder Mono-, Di-, Tri- oder Tetra-(C₂-C₆-Alkanol)-ammoniumionen steht und
a, b und c Zahlen von 0 bis 3 sind und a+b+c = ist, b jedoch nicht 0 ist.

3. Phosphorsäureester nach Anspruch 1, wobei
R¹ ein aliphatischer Rest mit 8-20 C-Atomen ist,
im Rest R²
n eine Zahl von 0 bis 5,
m eine Zahl von 1 bis 5,
X ein aliphatischer Rest mit 16-22 C-Atomen und
Y H ist,
im Rest R³
p eine Zahl von 9 bis 22,
R⁴ H und
Z H ist und
a, b und c Zahlen von 0 bis 3 sind und a+b+c = 3 ist, b jedoch nicht 0 ist.

4. Verfahren zur Herstellung von Phosphorsäureestem gemäß einem oder mehreren der Ansprüche 1-3, **dadurch gekennzeichnet, dass** man eine Mischung der Alkohole R¹OH, R²OH und R³OH mit Phosphoroxychlorid umsetzt, wobei R¹, R² und R³ die für Formel 1 angegebenen Bedeutungen besitzen, Y jedoch ausschließlich für Wasserstoff und Z entweder für Wasserstoff, Methyl oder Ethyl steht.

5. Verfahren nach Anspruch 4, **dadurch gekennzeichnet, dass** man 3 mol der Mischung der Alkohole R¹OH, R²OH und R³OH mit 1-2 mol, bevorzugt 1.0 bis 1.2 mol Phosphoroxychlorid umsetzt.

6. Verfahren nach Anspruch 4 oder 5, **dadurch gekennzeichnet, dass** die Alkohole R¹OH, R²OH und R³OH in folgenden Mengenverhältnissen eingesetzt werden
R¹OH 10 - 40, bevorzugt 30 - 40 mol %
R²OH 20 - 80, bevorzugt 30 - 40 mol % und
R³OH 10 - 40, bevorzugt 30 - 40 mol %,
wobei die Summe der Mengen der drei Alkohole immer 100 mol% beträgt.

7. Organische oder wässrig-organische Formulierungen enthaltend 25 bis 70 Gew.-% der Phosphorsäureester gemäß Formel 1.

8. Organische oder wässrig-organische Formulierungen nach Anspruch 7, **dadurch gekennzeichnet, dass** als organische Lösungsmittel Mono-, Di- oder Oligoethylenglykole, -propylenglykole oder -ethylen/propylenglykole, deren Mono- oder Diether oder Mischungen daraus, insbesondere Butyldiglykol oder Methyldiglykol eingesetzt werden.

9. Verwendung der Phosphorsäureester nach einem oder mehreren der Ansprüche 1-3 oder der Formulierungen nach Anspruch 7 oder 8 als Färbereihilfsmittel beim Färben von stickstoffhaltigen Fasermaterialien, bevorzugt Wolle.

10. Verwendung nach Anspruch 9, wobei die Färbung mit Säurefarbstoffen, 1:1-Metallkomplexfarbstoffen, 1:2-Metallkomplexfarbstoffen, Chromfarbstoffen oder deren Mischungen durchgeführt wird.

## Claims

1. Phosphoric esters of the general formula 1 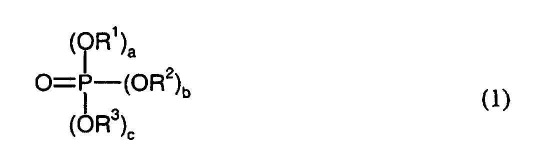 where
R¹ is an aliphatic radical of 1-30 carbon atoms,
R² is a radical of the general formula 2
where
n is from 0 to 30
m is from 1 to 29
X is an aliphatic radical of 4-24 carbon atoms and
Y is H or PO(OM)₂, where each M is independently H, alkali metal, ammonium, mono-, di-, tri- or tetra-(C₁-C₆-alkyl)-ammonium ions or mono-, di-, tri- or tetra-(C₂-C₆-alkanol)-ammonium ions,
R³ is a radical of the general formula 3 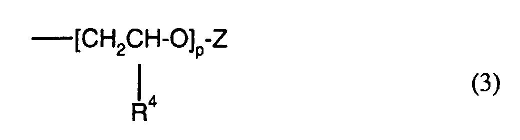 where
p is from 4 to 35,
R⁴ is H, methyl, ethyl or phenyl or denotes mixtures of H and methyl and
Z is H, methyl, ethyl or PO(OM)₂, where each M is independently H, alkali metal, ammonium, mono-, di-, tri- or tetra-(C₁-C₆-alkyl)-ammonium ions or mono-, di-, tri- or tetra(C₂-C₆-alkanol)-ammonium ions, and
a, b and c are each from 0 to 3 and a+b+c is = 3 but b is not 0.

2. Phosphoric esters according to Claim 1, wherein
R¹ is an aliphatic radical of 4-30 carbon atoms,
R² has
n from 0 to 10,
m from 1 to 10,
X an aliphatic radical of 12-24 carbon atoms and
Y H or PO(OM)₂, where each M is independently H, alkali metal, ammonium, mono-, di-, tri- or tetra-(C₁-C₆-alkyl)-ammonium ions or mono-, di-, tri- or tetra-(C₂-C₆-alkanol)-ammonium ions, and
R³ has
p from 4 to 35,
R⁴ H or methyl and
Z H, methyl, ethyl or PO(OM)₂, where each M is independently H, alkali- metal, ammonium, mono-, di-, tri- or tetra-(C₁-C₆-alkyl)-ammonium ions or mono-, di-, tri- or tetra-(C₂-C₆-alkanol)-ammonium ions, and
a, b and c are each from 0 to 3 and a+b+c is = 3 but b is not 0.

3. Phosphoric esters according to Claim 1, wherein
R¹ is an aliphatic radical of 8-20 carbon atoms,
R² has
n from 0 to 5,
m from 1 to 5,
X an aliphatic radical of 16-22 carbon atoms and
Y H,
R³ has
p from 9 to 22,
R⁴ H and
Z H and
a, b and c are each from 0 to 3 and a+b+c is = 3 but b is not 0.

4. Process for preparing phosphoric esters according to one or more of Claims 1 to 3, **characterized in that** a mixture of the alcohols R¹OH, R²OH and R³OH is reacted with phosphorus oxychloride, R¹, R² and R³ each being as defined for the formula 1, but Y exclusively representing hydrogen and Z representing either hydrogen or methyl or ethyl.

5. Process according to Claim 4, **characterized in that** 3 mol of the mixture of the alcohols R¹OH, R²OH and R³OH is reacted with 1-2 mol, preferably 1.0 to 1.2 mol, of phosphorus oxychloride.

6. Process according to Claim 4 or 5, **characterized in that** the alcohols R¹OH, R²OH and R³OH are used in the following mixing ratios:
R¹OH 10 - 40, preferably 30 - 40, mol %
R²OH 20 - 80, preferably 30 - 40, mol % and
R³OH 10 - 40, preferably 30 - 40, mol %,
the amounts of the three alcohols always adding up to 100 mol%.

7. Organic or aqueous-organic formulations containing 25 to 70% by weight of the phosphoric esters of the formula 1.

8. Organic or aqueous-organic formulations according to Claim 7, **characterized in that** the organic solvents used are mono-, di- or oligoethylene glycols, oligopropylene glycols or oligoethylene/propylene glycols, their mono- or diethers or mixtures thereof, especially butyldiglycol or methyldiglycol.

9. Use of the phosporic esters according to one or more of Claims 1-3 or of the formulations according to Claim 7 or 8 as dyeing auxiliaries in the dyeing of nitrogenous fibre materials, preferably wool.

10. Use according to Claim 9, wherein the dyeing is carried out with acid dyes, 1:1 metal complex dyes, 1:2 metal complex dyes, chromium dyes or mixtures thereof.

## Revendications

1. Esters d'acide phosphorique de formule générale (I) 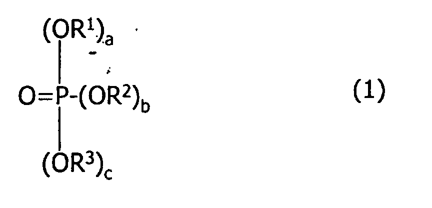 où
R¹ est un reste aliphatique ayant 1 à 30 atomes de carbone,
R² représente un reste de formule générale 2 : 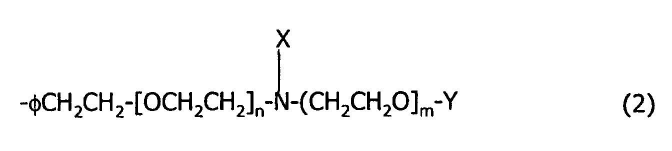 où
n est un nombre de 0 à 30,
m est un nombre de 1 à 29,
X est un reste aliphatique ayant 4 à 24 atomes de carbone et
Y est H ou PO(OM)₂, où M représente indépendamment H, des ions de métaux alcalins, ammonium, mono-, di-, tri- ou tétra-(alkyle en C₁-C₆)ammonium ou des ions mono-, di-, tri-, ou tétra-(alcanol en C₂-C₆)-ammonium,
R³ représente un reste de formule générale 3 : 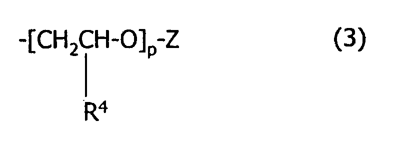 où p est un nombre de 4 à 35,
R⁴ représente H, méthyle, éthyle ou phényle ou des mélanges de H et de méthyle et
Z est H, méthyle, éthyle ou PO(OM)₂, où M représente indépendamment H, des ions de métaux alcalins, ammonium, mono-, di-, tri-, ou tétra-(alkyle en C₁-C₆)ammonium ou des ions mono-, di-, tri- ou tétra-(alcanol en C₂-C₆)ammonium, et
a, b et c sont des nombres de 0 à 3 et a+b+c=3, mais b n'est pas 0.

2. Esters d'acide phosphorique selon la revendication 1, où
R¹ est un reste aliphatique ayant 4 à 30 atomes de carbone,
dans le reste R²
n est un nombre de 0 à 10,
m est un nombre de 1 à 10,
X est un reste aliphatique ayant 12-24 atomes de carbone et
Y est H ou PO(OM)₂, où M représente indépendamment H, des ions de métaux alcalins, ammonium, mono-, di-, tri- ou tétra-(alkyle en C₁-C₆)ammonium ou des ions mono-, di-, tri- ou tétra-(alcanol en C₂-C₆)ammonium et
dans le reste R³
p est un nombre de 4 à 35,
R⁴ est H ou méthyle et
Z est H, méthyle, éthyle ou PO(OM)₂, où M représente indépendamment H, des ions de métaux alcalins, ammonium, mono-, di-, tri- ou tétra-(alkyle en C₁-C₆)ammonium ou des ions mono-, di-, tri- ou tétra-(alcanol en C₂-C₆)ammonium et
a, b et c sont des nombres de 0 à 3, et a+b+c=3, mais b n'est pas 0.

3. Esters d'acide phosphorique selon la revendication 1, où
R¹ est un reste aliphatique ayant 8 à 20 atomes de carbone,
dans le reste R²
n est un nombre de 0 à 5,
m est un nombre de 1 à 5,
X est un reste aliphatique ayant 16 à 22 atomes de carbone et Y est H,
dans le reste R³
p est un nombre de 9 à 22,
R⁴ est H et
Z est H et
a, b et c sont des nombres de 0 à 3 et a+b+c=3, mais b n'est pas 0.

4. Procédé de préparation d'esters d'acide phosphorique selon une ou plusieurs des revendications 1 à 3, **caractérisé en ce que** l'on fait réagir un mélange des alcools R¹OH, R²OH et R³OH avec l'oxychlorure de phosphore, où R¹, R² et R³ possèdent les significations indiquées pour la formule 1, mais Y représente exclusivement l'hydrogène et Z représente l'hydrogène, méthyle ou éthyle.

5. Procédé selon la revendication 4, **caractérisé en ce que** l'on fait réagir 3 moles du mélange des alcools R¹OH, R²OH et R³OH avec 1-2 mol, de préférence 1,0 à 1,2 mol, d'oxychlorure de phosphore.

6. Procédé selon la revendication 4 ou 5, **caractérisé en ce que** les alcools R¹OH, R²OH et R³OH sont utilisés en les proportions suivantes :
R¹OH 10-40, de préférence 30-40 mol %
R²OH 20-80, de préférence 30-40 mol %, et
R³OH 10-40, de préférence 30-40 mol %,
où la somme des quantités des trois alcools est toujours égale à 100 mol %.

7. Formulations organiques ou aqueuses-organiques, contenant 25 à 70 % en masse des esters d'acide phosphorique selon la formule 1.

8. Formulations organiques ou aqueuses-organiques selon la revendication 7, **caractérisées en ce que** l'on utilise comme solvants organiques des mono-, di- ou oligo-éthylèneglycols, -propylèneglycols ou -éthylène/propylèneglycols, leurs mono- ou diéthers ou des mélanges de ceux-ci, en particulier le butyldiglycol ou le méthyldiglycol.

9. Utilisation des esters d'acide phosphorique selon une ou plusieurs des revendications 1 à 3, ou des formulations selon la revendication 7 ou 8, comme adjuvants de teinture lors de la teinture de matériaux fibreux azotés, de préférence de la laine.

10. Utilisation selon la revendication 9, où la teinture est réalisée avec des colorants acides, des colorants de complexes métalliques 1:1, des colorants de complexes métalliques 1:2, des colorants au chrome ou leurs mélanges.
